# EUROPÄISCHE PATENTSCHRIFT

(11) **EP 1 966 567 B1**
(45) Veröffentlichungstag und Bekanntmachung des Hinweises auf die Patenterteilung: **04.05.2016**
(21) Anmeldenummer: 06829603.7
(22) Anmeldetag: 14.12.2006
(51) Int. Cl.: G01D 11/24

(54) **ELEKTRONIKEINSATZ-ANORDNUNG FÜR EIN MESSGERÄTGEHÄUSE**
ELECTRONIC INSERT ARRANGEMENT FOR A MEASURING DEVICE HOUSING
SYSTEME A ELEMENT ELECTRONIQUE RAPPORTE POUR BOITIER D'APPAREIL DE MESURE

(30) Priorität: 27.12.2005 DE 102005062420; 27.12.2005 US 754527 P
(43) Veröffentlichungstag der Anmeldung: 10.09.2008
(73) Patentinhaber: VEGA Grieshaber KG, 77709 Wolfach (DE)
(72) Erfinder: OHMAYER, Gerd, 77716 Haslach (DE); STAIGER, Holger, 78739 Hardt (DE); DECK, Thomas, 77709 Wolfach (DE)
(74) Vertreter: Kopf, Korbinian Paul
(86) Internationale Anmeldenummer: PCT/EP2006/012048
(87) Internationale Veröffentlichungsnummer: WO 2007/073876

(56) Entgegenhaltungen:
- EP-A- 1 538 425
- WO-A-2004/026013
- WO-A1-02/49408
- DE-A1- 3 743 446
- DE-A1- 10 146 093
- DE-U1- 9 014 135
- DE-U1- 20 005 084
- DE-U1- 20 111 830
- DE-U1- 29 723 178

## Beschreibung

Die vorliegende Anmeldung beansprucht die Priorität der US Provisional Patentanmeldung Nr. 60/754,527, eingereicht am 27. Dezember 2005 und der deutschen Patentanmeldung Nr. 10 2005 062 420.0, eingereicht am 27. Dezember 2005, deren Inhalte hierin durch Referenz inkorporiert werden.

Die vorliegende Erfindung betrifft ein Messgerätegehäuse. Insbesondere betrifft die vorliegende Erfindung eine Elektronikeinsatz-Anordnung für ein Messgerätegehäuse und ein Messgerät mit einer Elektronikeinsatz-Anordnung.

Die Serienfertigung von Messgeräten, insbesondere von Füllstands- und Druckmessgeräten, wird erleichtert, indem möglichst viele Bauteile und Komponenten der Messgeräte standardisiert werden. Dies gilt vor allem für die Funktionen, die für die eigentliche Messaufgabe zuständig sind. Dabei kann es sich um eine elektronische Messschaltung mit entsprechenden Programmen handeln.

Es kann jedoch vorkommen, dass auf besonderen Wunsch eines Kunden zusätzliche Funktionen für ein Standardmessgerät bereitgestellt werden sollen. Diese individuellen Anpassungen sind oftmals nur für wenige Messgeräte nötig. Allerdings müssen zur Ausführung der Zusatzfunktionen oftmals Zusatzbaugruppen entwickelt werden.

Da für diese Zusatzbaugruppen auch ein zusätzlicher Einbauraum nötig ist, werden diese Zusatzbaugruppen bisher lose, d. h. je nach Platzverhältnissen in irgendwelchen Hohlräumen im Gehäuse des Messgeräts zwischen den Hauptbaugruppe und der Gehäusewand verstaut. Oft sind die Hauptbaugruppen in einem Elektronikeinsatz oder Elektronikbecher mit einem festen Sitz im Messgerätegehäuse untergebracht.

Die Zusatzbaugruppen liegen aufgrund der nicht positionsfesten Verstauung dabei jedoch bei jedem Gerät unterschiedlich in einem Hohlraum zwischen dem Elektronikbecher und der Gehäusewand des Messgeräts. Die Zusatzbaugruppen können aber auch in einer Überkopfmontage des Messgeräts montiert sein. Dabei ist neben der fehlenden positionsfesten Montage der Zusatzbaugruppe auch keine Sicherung gegen Vibrationen oder Erschütterungen gegeben. Folglich können die Zusatzbaugruppen ihre Position im Gehäuse verändern, wodurch die Zusatzbaugruppen in dem Messgerätegehäuse, je nach ihrer mechanischen Beanspruchung, wandern können. Dadurch können die Zusatzbauteile bzw. Zusatzelektroniken mit anderen beweglichen Bauteilen, die in den Gehäuseraum ragen, kollidieren und diese ggf. sogar verklemmen.

Außerdem liegen die Zusatzbauteile bzw. Zusatzelektroniken aufgrund der nicht positionsfesten Verstauung bei jedem Messgerät unterschiedlich in dem Hohlraum zwischen dem Elektronikbecher und der Messgehäusewand, wodurch kein einheitlicher und standardisierbarer Aufbau möglich ist.

Neben der losen und wirren Einbringung in Hohlräumen in dem Messgerätegehäuse, werden Zusatzbauteile heute oftmals mit Kabelbindern an beweglichen Leitungen angebracht oder unlösbar mit Klebstoff festgeklebt. Durch diese Art der Anbringung können jedoch andere Bauteile verändert werden.

Es ist eine Aufgabe der vorliegenden Erfindung, eine zuverlässige Befestigung eines Zusatzmoduls in einem Messgerät anzugeben.

Die Druckschrift DE 101 46 093 A1 beschreibt ein Elektronikmodul, das auf eine Halterung aufsteckbar ist und das einen zweiten Stecker zur Aufnahme weiterer Elektronikmodule aufweist. Hierbei treten Steckerkontakte in elektrischen Kontakt.

Aus der Druckschrift DE 201 11 830 U1 ist ein modularer Geräteaufbau umfassend zumindest zwei elektrisch und/oder mechanisch miteinander verbindbare Module mit Funktionseinheiten bekannt.

Die Druckschrift WO 02/49408 beschreibt ein Modul für Messzwecke bei dem zwei Anlageflächen von benachbarten Modulen in Verbindung verbringbar sind.

Die Druckschrift DE 297 23 178 U1 betrifft ein elektronisches Gerät mit einem zusätzlichen Steckplatz für die Aufnahme eines Applikationsmoduls, das einen seitlichen Schlitz aufweist, in den ein auf der Rückseite des Gerätes verschiebbares Lineal eingreift.

Die Druckschrift DE 90 14 135 U1 betrifft ein Wegmessgerät mit einem Gehäuse, das mit zangenartigen Kupplungsteilen versehen ist.

Ferner beschreibt die DE 37 43 446 A1 ein aus wenigstens zwei elektrischen Geräten bestehendes Gerätesystem, in dem jedes Gerät vollständig von einem Gehäuse umschlossen ist und in dem zwei mit einer Wandseite gegenüberliegende Geräte unmittelbar über elektrische Kontakte und über mechanische Befestigungselemente lösbar miteinander verbunden sind.

Demgemäß wird eine Elektronikeinsatz-Anordnung für ein Messgerät und ein Messgerät mit einer Elektronikeinsatz-Anordnung mit den Merkmalen gemäß den unabhängigen Patentansprüchen angegeben.

Gemäß der vorliegenden erfindung wird eine Elektronikeinsatz-Anordnung für ein Messgerätegehäuse mit einem Elektronikeinsatz und einem Elektronikmodul bereitgestellt. Der Elektronikeinsatz weist eine erste Befestigungseinrichtung und eine erste Schnittstelle auf und das Elektronikmodul weist eine zweite Befestigungseinrichtung und eine zweite Schnittstelle auf. Wird das Elektronikmodul mit dem Elektronikeinsatz verbunden, so sind die erste Befestigungseinrichtung und die zweite Befestigungseinrichtung derart in Eingriff bringbar, dass ein Abstand, den die erste Schnittstelle von der zweiten Schnittstelle im eingebauten Zustand aufweist, bei einer Bewegung des Elektronikeinsatzes im Wesentlichen konstant bleibt. Der Elektronikeinsatz, insbesondere eine von ihm behauste Baugruppe, ist zur Ausführung von Prozessen einer ersten Funktionalität eingerichtet und das Elektronikmodul, insbesondere eine von ihm behauste Baugruppe, ist zur Ausführung von Prozessen einer zweiten Funktionalität eingerichtet.

Gemäß einem weiteren exemplarischen Ausführungsbeispiel wird ein Elektronikeinsatz für ein Messgerätegehäuse bereitgestellt, der zur Ausführung von Prozessen einer ersten Funktionalität eingerichtet ist und der eine erste Befestigungseinrichtung aufweist. Diese erste Befestigungseinrichtung ist derart eingerichtet, dass die erste Befestigungseinrichtung mit einer zweiten Befestigungseinrichtung eines Elektronikmoduls koppelbar ist. Ferner weist der Elektronikeinsatz eine erste Schnittstelle auf, wobei die erste Schnittstelle in einem gekoppelten Zustand des Elektronikeinsatzes mit dem Elektronikmodul einen Abstand zu einer zweiten Schnittstelle des Elektronikmoduls aufweist. Dieser Abstand zwischen der ersten Schnittstelle und der zweiten Schnittstelle bleibt bei einer Bewegung des Elektronikeinsatzes im Wesentlichen konstant.

Ferner wird gemäß einem anderen exemplarischen Ausführungsbeispiel ein Elektronikmodul für ein Messgerätegehäuse bereitgestellt, wobei das Elektronikmodul zur Ausführung von Prozessen einer zweiten Funktionalität eingerichtet ist und wobei das Elektronikmodul eine zweite Befestigungseinrichtung aufweist. Die zweite Befestigungseinrichtung ist mit einer ersten Befestigungseinrichtung eines Elektronikeinsatzeskoppelbar. Das Elektronikmodul weist außerdem eine zweite Schnittstelle auf, wobei die zweite Schnittstelle in einem gekoppelten Zustand einen Abstand zu einer ersten Schnittstelle des Elektronikeinsatzes aufweist. Der Abstand zwischen der zweiten Schnittstelle und der ersten Schnittstelle bleibt bei einer Bewegung des Elektronikeinsatzes im Wesentlichen konstant.

Gemäß der vorliegenden Erfindung wird ein Messgerät mit einer Elektronikeinsatz-Anordnung bereitgestellt. Die Elektronikeinsatz-Anordnung weist dabei die oben angegebenen Merkmale auf.

Ein Elektronikeinsatz kann ein Standardmodul zur Bereitstellung von messgerätespezifischen Funktionen sein. Durch den modularisierten Aufbau eines Messgeräts, insbesondere eines Druck- und Füllstandsmessgeräts, kann die Montage des Messgeräts vereinfacht werden. Für den Aufbau des Messgeräts kann ein Standardgehäusetyp eingesetzt werden, der von dem Messgerättyp abhängige Einsätze aufnehmen kann. Dieser messgerätetypische Einsatz in dem Standardgehäuse kann für die Bereitstellung und Auswertung der Messgröße, für die das Messgerät bestimmt ist, ausgebildet sein. So kann der Elektronikeinsatz beispielsweise für eine Druckmessung oder für eine Füllstandsmessung eingerichtet sein.

Eine Baugruppe oder Leiterbaugruppe mit der entsprechenden Steuersoftware, die für die Messung von Füllständen ausgebildet ist kann sich von einer Baugruppe, die auf die Messung von Drücken spezialisiert ist, unterscheiden. Daher kann sich auch die Funktionalität verschiedener Elektronikeinsätze von einander unterscheiden.

Es kann aber auch zwischen Elektronikeinsätzen nach der Art und Weise wie sie die entsprechenden Messgrößen aufnehmen unterschieden werden. Füllstände können beispielsweise mittels Radarimpulsen, Hochfrequenz, Ultraschall oder kapazitiv ermittelt werden. Folglich können sich die realisierten Funktionalitäten von Elektronikeinsätzen, die für die Bestimmung des gleichen Messtyps ausgebildet sind, unterscheiden.

Außerdem kann ein Elektronikeinsatz für den Anschluss an einem Messgerätebus vorgesehen sein. Beispiele für Messbusse sind der HART®-Bus, insbesondere als Zweidraht- oder Vierdrahttechnik realisiert, der VBUS, der Fieldbus-Foundation-Bus oder der Profibus. Die für den entsprechenden Bustyp vorgesehenen Standard-Elektronikeinsätze können sich anhand der an den Elektronikeinsätzen ausgebildeten Schnittstellen wie Anschlussklemmen unterscheiden.

In anderen Worten bedeutet das, dass sich die Funktionalität verschiedener Elektronikeinsätze abhängig von der mit ihnen realisierten Messfunktion unterscheidet. Allerdings sind die äußeren Abmessungen der beispielsweise aus Kunststoff gefertigten Gehäuse im Wesentlichen gleich. Die Elektronikeinsätze können jedoch zur Bereitstellung unterschiedlicher Anschlüsse entsprechende Schnittstellen aufweisen.

Sollen Zusatzfunktionalitäten zu den Elektronikeinsätzen realisiert werden, können zusätzliche Baugruppen oder Module nötig sein, die die Grundfunktionalität des entsprechenden Elektronikeinsatzes erweitern. Eine benötigte zusätzliche Funktionalität kann beispielsweise eine Displaybeleuchtung oder eine Displayheizung sein. Dabei können sich die zusätzlichen Funktionalitäten von den Funktionalitäten des Elektronikeinsatzes unterscheiden. Folglich können die Prozesse der Elektronikeinsatz-Funktionalität vollkommen unterschiedlich von den Prozessen der Zusatzmodul-Funktionalität sein.

Für die zusätzlichen Baugruppen kann in dem Messgerätegehäuse zusätzlicher Platz für Zusatzbaugruppen erforderlich sein. Werden die Zusatzbauteile, Zusatzelektroniken oder Zusatzbaugruppen in einem Elektronikmodul als Erweiterungsmodul bereitgestellt, können zweite Befestigungseinrichtungen an dem Elektronikmodul derart ausgebildet sein, dass sie mit ersten Befestigungseinrichtungen des Elektronikeinsatzes oder des Elektronikbechers in Eingriff bringbar sind Dadurch kann das Elektronikmodul mit dem Elektronikeinsatz gekoppelt werden. Eine Relativbewegung zwischen dem Elektronikeinsatz und dem Elektronikmodul kann durch die Koppelung mittels der ersten und der zweiten Befestigungseinrichtung verhindert werden.

Der Elektronikeinsatz kann ein Gehäuse aufweisen, das eine Leiterbaugruppe zur Realisierung der Prozesse der ersten Funktionalität aufnehmen kann. Das Elektronikmodul kann auch ein Gehäuse aufweisen, welches Bauteile oder Leiterbaugruppen oder Elektronikprints aufnehmen kann, die die Prozesse der zweiten Funktionalität realisieren.

Es kann darüber hinaus nötig sein, zwischen dem Elektronikeinsatz und dem Elektronikmodul Informationen oder Leistung auszutauschen. Für den Austausch von Information oder Leistung können Anschlussleitungen, die mit dem Elektronikeinsatz und dem Elektronikmodul verbunden sein können, verwendet werden. Die Anschlussleitungen können an Schnittstellen, die an dem Elektronikeinsatz bzw. an dem Elektronikmodul ausgebildet sein können, angeschlossen werden.

Der Elektronikeinsatz, insbesondere das Gehäuse des Elektronikeinsatzes, weist eine erste Schnittstelle auf, durch die eine Anschlussleitung von dem Elektronikmodul zu einer Leiterbaugruppe des Elektronikeinsatzes gelangen kann. Auch das Elektronikmodul, insbesondere das Gehäuse des Elektronikmoduls, weist eine Schnittstelle auf, durch die eine Anschlussleitung von dem Elektronikeinsatz zu einer Leiterbaugruppe des Elektronikmoduls gelangen kann.

Diese Schnittstelle kann auch beispielsweise als Klemmanschluss für Anschlussleitungen ausgebildet sein. Das HART® Protokoll sieht beispielsweise vor, dass der zugehörige Bus in der Form einer Zweidrahtleitung oder Vierdrahtleitung ausgebildet sein kann. Bei der Zweidrahttechnik können zwei Schnittstellenanschlüsse vorgesehen sein, während bei der Vierdrahttechnik vier Anschltisse vor gesehen sein können.

Soll eine Kommunikation zwischen den Zusatzfunktionen eines Elektronikmoduls mit den Funktionalitäten des Elektronikeinsatzes stattfinden, kann diese Kommunikation über die Anschlussleitungen erfolgen. Die Anschlussleitungen verbinden das Elektronikmodul mit dem Elektronikeinsatz. Der Anschluss der Anschlussleitung mit dem jeweiligen Bauteil an den jeweiligen Baugruppen kann über Lötverbindungen oder Steckverbindungen erfolgen. Wird das Elektronikmodul lose im Messgerätegehäuse angebracht, kann das Elektronikmodul durch äußere mechanische Einflüsse, wie Rütteln oder durch Stöße, aufgrund der Trägheit des Elektronikmoduls, innerhalb des Gehäuses wandern.

Wenn das Elektronikmodul nur mittels Anschlussleitungen an dem Elektronikeinsatz befestigt ist und der Elektronikeinsatz mit dem Messgerätegehäuse befestigt ist, kann es bei einer Bewegung des Elektronikeinsatzes zu einer Relativbewegung des Elektronikmoduls gegenüber dem Elektronikeinsatz kommen. Dadurch würde sich auch ein Abstand einer Schnittstelle des Elektronikmoduls zu einer Schnittstelle des Elektronikeinsatzes verändern.

Es kann folglich eine Zugkraft des Elektronikmoduls auf die Anschlussleitung ausgeübt werden, so dass die Anschlussleitung aus ihrer Befestigung gelöst wird. Die Folge davon kann wiederum sein, dass es zu Kontaktstörungen und Defekten des Messgeräts bzw. der Zusatzfunktion des Messgeräts, die über das Elektronikmodul bereitgestellt wird, kommt.

Mittels der Anbringung des Elektronikmoduls an dem Elektronikeinsatz kann eine Relativbewegung des Elektronikmoduls gegenüber dem Elektronikeinsatz vermieden werden. Das Elektronikmodul kann einer Bewegung des Elektronikeinsatzes folgen.

Aufgrund des Wanderns des Elektronikmoduls könnte es ebenfalls zu einem Scheuern an hervorstehenden anderen Bauteilen im Inneren des Messgerätegehäuses kommen. Ein Scheuern des Elektronikmoduls an anderen Bauteilen kann ebenfalls durch den positionsfesten Einbau an dem Elektronikeinsatz im Inneren des Messgerätegehäuses vermieden werden, ebenso wie Verklemmungen mit anderen Bauteilen vermieden werden können. Positionsveränderungen bei einer Überkopfmontage können ebenfalls vermieden werden.

Im Folgenden werden weitere beispielhafte Ausführungsbeispiele der Elektronikeinsatz-Anordnung beschrieben. Diese Ausführungsbeispiele und Ausgestaltungen gelten auch für den Elektronikeinsatz, für das Elektronikmodul und das Messgerät mit einer Elektronikeinsatz-Anordnung.

Gemäß der vorliegenden Erfindung wird eine Elektronikeinsatz-Anordnung angegeben, wobei der Abstand der ersten Schnittstelle des Elektronikeinsatzes und der zweiten Schnittstelle des Elektronikmoduls bei einer Vibration im Wesentlichen konstant bleibt.

Vibrationen können mechanische Belastungen sein, die insbesondere bei Messungen, die auf bewegten Objekten durchgeführt werden, auftreten können. Durch Vibrationen entstehen meist nur kleine Kräfte, aber das regelmäßige Auftreten dieser Kräfte kann zu Beanspruchungen führen, die sich insbesondere auf eingesteckte Verbindungen auswirken können. Klemmverbindungen können sich über längere Zeit betrachtet aufgrund von Vibrationen lösen. Eine vibrationssichere Befestigung, bei der eine erste Befestigungseinrichtung mit einer zweiten Befestigungseinrichtung vibrationssicher in Eingriff geht, kann eine Relativbewegung des Elektronikmoduls gegenüber dem Elektronikeinsatz bei Vibrationen vermeiden. Folglich können Belastungen aufgrund von Vibration von Anschlussleitungen ferngehalten werden.

Gemäß einem weiteren Ausführungsbeispiel der vorliegenden Erfindung sind die erste Befestigungseinrichtung und die zweite. Befestigungseinrichtung werkzeuglos in Eingriff bringbar.

Bei Reparaturarbeiten, insbesondere bei Erweiterungen von Funktionalitäten für Messgeräte, kann es nötig sein, dass das Messgerätegehäuse geöffnet wird und das Elektronikmodul abgebaut werden soll, um einen Eingriff in das Innere des Messgerätegehäuse zu ermöglichen. Eine modulare Aufbauweise kann verhindern, dass es zu komplizierter Handhabung von Werkzeugen bei dem Auseinander- bzw. Zusammenbau eines Messgerätes kommt. Oftmals werden Spezialwerkzeuge benötigt, um Teile ausbauen zu können. Lässt sich eine Kopplung, insbesondere eine verbundene Befestigung mittels der ersten Befestigungseinrichtung und der zweiten Befestigungseinrichtung, werkzeuglos öffnen oder schließen, so kann der Einbau eines Elektronikmoduls beschleunigt werden.

Gemäß der vorliegenden Erfindung weist der Elektronikeinsatz eine erste ebene Fläche auf und das Elektronikmodul weist eine zweite ebene Fläche auf. In einem Betriebszustand, in dem die erste Befestigungseinrichtung und die zweite Befestigungseinrichtung in Eingriff gebracht sind, kommen die erste ebene Fläche und die zweite ebene Fläche im Wesentlichen plan aufeinander zu liegen.

Da die Reibungskraft, die zwei aufeinanderliegende Körper ausüben, umso größer ist, je größer die Fläche der aufeinanderliegenden bzw. in Berührung stehenden Flächen ist, kann es der Sicherung der Position bzw. der Erhöhung der Vibrationssicherheit dienen, wenn eine möglichst große ebene Fläche als Auflagefläche eines Elektronikmoduls auf oder an einem Elektronikeinsatz verwendet wird.

Gemäß einem weiteren Ausführungsbeispiel der vorliegenden Erfindung ist die erste Befestigungseinrichtung und die zweite Befestigungseinrichtung als eine Klemmverbindung oder Rast-Schnapp-Verbindung ausgebildet.

Eine Klemmverbindung kann eine Reibungskraft zweier in Verbindung stehender Befestigungseinrichtungen nutzen, um zwei in Verbindung stehende Teile zusammenzuhalten. Dabei können beispielsweise Federn oder die Wirkung von federnden Bauteilen verwendet werden, um den Anpressdruck zu erhöhen und somit die Festigkeit der Befestigung zu erhöhen.

Bei Rast-Schnapp-Verbindungen oder Snap-in-Verbindungen kommen besonders angepasste Hakenverbindungen zum Einsatz, die ein einfaches Einrasten ermöglichen, aber ein Lösen im Wesentlichen verhindern. Ein Beispiel für eine Rast-Schnapp-Verbindung ist ein Widerhaken.

Gemäß einem weiteren Ausführungsbeispiel der vorliegenden Erfindung ist die erste Befestigungseinrichtung als angespritzte Aufnahme ausgebildet.

Da es sich bei dem Elektronikeinsatz um ein Standardbauteil handeln kann, das selbst bereits aufgrund der Modularität der Bauteile gewisse Anbauteile aufweist, kann es die Herstellung des Elektronikeinsatzes vereinfachen, wenn eine bereits bestehende angespritzte Aufnahme zur Befestigung des Elektonikmoduls genutzt wird, um das Elektronikmodul an dem Elektronikeinsatz anzubringen. Die zweite Befestigungseinrichtung des Elektronikmoduls kann derart ausgestaltet sein, dass sie an einem an allen Elektronikbechern oder Elektronikeinsätzen vorhandenem angespritzten Geometrien einrasten kann oder verklemmt werden kann.

In anderen Worten bedeutet das, dass beispielsweise ein Elektronikeinsatz eine Schraubenaufnahme für die Befestigung des Elektronikeinsatzes in dem Messgerätegehäuse mittels einer Schraube aufweisen kann. Diese Schraubenaufnahme kann durch die Gestaltung der zweiten Befestigungseinrichtung des Elektronikmoduls derart genutzt werden, dass die Befestigungseinrichtung neben ihrer eigentlichen Funktion, die vorsieht als Befestigung des Elektronikeinsatzes am Messgerätegehäuse zu dienen, der Befestigung des Elektronikmoduls an dem Elektronikeinsatz dient.

Gemäß noch einem weiteren Ausführungsbeispiel der vorliegenden Erfindung ist die erste Befestigungseinrichtung als Schienenaufnahme ausgebildet, wobei die zweite Befestigungseinrichtung als Führungsschiene ausgebildet ist. Die Führungsschiene und die Schienenaufnahme sind in Eingriff bringbar.

Bei dem In-Eingriffbringen der Führungsschiene und der Schienenaufnahme können Reibungskräfte entstehen, die die Führungsschiene in der Schienenaufnahme an einer festen Position halten können. Durch die besondere Ausgestaltung dieses Schienenführungssystems kann beispielsweise unter zusätzlicher Verwendung einer Rast-Schnapp-Verbindung ein zusätzlicher Rückhalt geschaffen werden. Somit kann ein positionssicherer Einbau des Elektronikmoduls sichergestellt werden.

Gemäß einem weiteren Ausführungsbeispiel der vorliegenden Erfindung ist die erste Befestigungseinrichtung derart ausgestaltet, dass der Elektronikeinsatz mittels der ersten Befestigungseinrichtung an dem Messgerätegehäuse befestigbar ist. Beispielsweise kann die erste Befestigungseinrichtung eine Schraubenaufnahme zur Befestigung des Elektronikeinsatzes an dem Messgerätegehäuse sein.

Gemäß einem weiteren Ausführungsbeispiel der vorliegenden Erfindung ist die erste Befestigungseinrichtung als Schraubenaufnahme ausgebildet. Dabei kann die Schraubenaufnahme eine an dem Elektronikeinsatz angespritzte Geometrie sein.

Gemäß einem weiteren Ausführungsbeispiel der vorliegenden Erfindung ist das Elektronikmodul ausgebildet, einen Elektronikprint aufzunehmen.

Das Elektronikmodul kann, aufgrund des in ihm angeordneten Elektronikprints oder der in ihm angeordneten Zusatzbaugruppe, Zusatzfunktionen ausführen. Das Elektronikmodul kann dazu beispielsweise einen festen Hohlbereich bereitstellen, in dem ein Elektronikprint montiert werden kann.

Gemäß einem weiteren Ausführungsbeispiel der vorliegenden Erfindung weist das Elektronikmodul ein Gehäuse auf.

Mittels eines Gehäuses kann ein Erweiterungsmodul bzw. ein Elektronikmodul standardisiert werden. Das Gehäuse, insbesondere die äußere Form des Gehäuses und weiter insbesondere die zweite Befestigungseinrichtung des Gehäuses eines Elektronikmoduls, kann zur Anbringung an der ersten Befestigungseinrichtung eines Elektronikeinsatzes ausgebildet sein. Ein Gehäuse eines Elektronikmoduls kann dabei einen fest definierten Raum zur Verfügung stellen, in den beispielsweise eine Baugruppe oder ein Bauteil zusätzlich eingebracht werden kann. Mittels einer Standardisierung des Elektronikmodulgehäuses kann eine Elektronikeinsatz-Anordnung ebenfalls als modulares System unabhängig von den zu realisierenden zusätzlichen Funktionalitäten ausgebildet werden.

Gemäß einem weiteren Ausführungsbeispiel der vorliegenden Erfindung ist das Elektronikmodul als Vergusselement ausgebildet.

Die Außenform des Vergusselements kann dabei derart an die erste Befestigungseinrichtung eines Elektronikeinsatzes angepasst sein, dass das Vergusselement an dem Elektronikeinsatz befestigbar ist. Bei dem Vergießen einer Baugruppe mit einem Harz oder Kunststoff kann auf die individuelle Form einer Baugruppe bzw. eines Baugruppenträgers eingegangen werden und der Baugruppenträger kann an die Form der ersten Befestigungseinrichtung angepasst werden.

Insbesondere kann die Baugruppe mit einer zweiten Befestigungseinrichtung versehen werden und so an die erste Befestigungseinrichtung angepasst werden. Außerdem können vergossene Bauteile gegen eine Bewegung gesichert sein. Das Vergussmaterial kann zur Erhöhung des Reibungskoeffizienten der ebenen Flächen des Elektronikmoduls und Elektronikeinsatzes aufeinander dienen und somit zu einer Erhöhung der Positionssicherheit beitragen.

Gemäß einem weiteren Ausführungsbeispiel der vorliegenden Erfindung weist das Elektronikmodul ein EMV-Filter auf.

Die Anwendung des Elektronikeinsatzes in einer EMV belasteten Umgebung kann beispielsweise dazu führen, dass Bauteile im Innern der Elektronik des Elektronikeinsatzes infolge leitungsgebundener EMV-Störungen gestört oder zerstört werden können. Eine Zerstörung der Bauteile kann mittels eines im Elektronikmodul befindlichen EMV-Filters verhindert werden. Umgekehrt können leitungsgebundene Störungen, die im Elektronikeinsatz erzeugt werden, wegen des EMV-Filters das Messgerätegehäuse nicht verlassen.

In anderen Worten bedeutet das, dass externe Zuleitungen, beispielsweise Zuleitungen, die von einem Messbus oder einer Stromversorgung an den Elektronikeinsatz führen können, insbesondere an Baugruppen in dem Elektronikeinsatz angeschlossen werden sollen. Diese Leitungen können, bevor sie auf dem Elektronikeinsatz terminiert werden, dem Elektronikmodul, das ein EMV-Filter aufweist, zugeführt werden. Das EMV-Filter kann somit zwischen den externen Leitungen und dem Elektronikeinsatz angekoppelt oder vorgeschalten sein und die Störungen beseitigen.

In diesem Zusammenhang mag extern bedeuten, dass eine Leitung zumindest teilweise außerhalb eines Messgerätegehäuses, Sensorgehäuses oder eines Feldgerätegehäuses verläuft. Folglich kann die Leitung externen Störungen ausgesetzt sein und die Leitung könnte die Störungen zu dem Elektronikeinsatz führen.

Das Elektronikmodul kann somit als Vor-Filter für den Elektronikeinsatz und folglich als Schutz für den Elektronikeinsatz eingerichtet sein. Das EMV-Filter in oder an dem Elektronikmodul kann derart eingerichtet sein, dass Störungen oder Störeinflüsse, die aufgrund von elektro-magnetischen Wechselwirkungen insbesondere in den externen Leitungen hervorgerufen werden, außerhalb des Elektronikeinsatzes beseitigt werden können und im Wesentlichen nicht zu dem Elektronikeinsatz gelangen können. Solche Störeinflüsse können beispielsweise in der Nähe eines Induktionsofen auftreten. Das EMV-Filter kann folglich den Elektronikeinsatz von den externen Leitungen entkoppeln.

Gemäß einem weiteren Ausführungsbeispiel der vorliegenden Erfindung weist das Elektronikmodul eine Anschlussleitung auf, wobei die Anschlussleitung derart eingerichtet ist, dass eine erste Schnittstelle mit einer zweiten Schnittstelle verbindbar ist.

Der Informations- bzw. Energieaustausch zwischen dem Elektronikeinsatz und dem Elektronikmodul kann mittels der Anschlussleitung erfolgen, wobei die Anschlussleitung zum Kontaktieren einer Elektronikbaugruppe in dem Elektronikeinsatz bzw. einer Elektronikbaugruppe in dem Elektronikmodul über die Schnittstelle in das Innere des Elektronikeinsatzes bzw. des Elektronikmoduls gelangen kann. Mittels der Anschlussleitung kann eine Verbindung zwischen dem Elektronikmodul und dem Elektronikeinsatz hergestellt werden.

Gemäß noch einem weiteren Ausführungsbeispiel der vorliegenden Erfindung ist das Elektronikmodul zur Verarbeitung eines 4 bis 20 mA-Signals eingerichtet.

In der Messtechnik können 4 bis 20 mA-Stromsignale sowohl zum Übertragen von Messinformation als auch von Leistungen oder Energie eingesetzt werden. Folglich kann es vorkommen, dass zwischen den Elektronikeinsatz und dem Elektronikmodul auch 4 bis 20 mA-Signale ausgetauscht werden.

Gemäß einem weiteren Ausführungsbeispiel der vorliegenden Erfindung kann der Elektronikeinsatz zur Ausführung einer Messfunktionalität eingerichtet sein. Es kann sich beispielsweise bei dem Elektronikeinsatz um einen Elektronikeinsatz für die Durchführung von einer Messung mittels eines Füllstandsensor oder Drucksensors handeln. Der Elektronikeinsatz kann die bei der Messung gewonnenen Messergebnisse bereitstellen.

Gemäß einem weiteren Ausführungsbeispiel der vorliegenden Erfindung kann das Elektronikmodul zur Ausführung einer Anzeigenfunktionalität eingerichtet sein.

Eine Anzeigenfunktionalität kann eine zusätzliche Funktion sein, die sich von der Messfunktionalität unterscheidet. Folglich kann es nötig sein, zusätzliche Baugruppen, die in einem externen Elektronikmodul unterbringbar sind, einzusetzen. Ein Elektronikmodul zur Ausführung einer Anzeigenfunktionalität, insbesondere einer Displaybeleuchtung, kann unabhängig von der Messfunktion erweitert werden.

Gemäß einem weiteren Ausführungsbeispiel der vorliegenden Erfindung ist das Elektronikmodul zur Ausführung einer Heizfunktionalität eingerichtet.

Insbesondere kann eine Heizfunktionalität eine Beheizung eines Displays zur besseren Ablesbarkeit eines Displays sein. Die Heizfunktionalität kann mittels zusätzlicher Baugruppen erfolgen und somit in einem Erweiterungsmodul zusätzlich zu dem Elektronikeinsatz zum Einsatz kommen.

Gemäß noch einem weiteren Ausführungsbeispiel der vorliegenden Erfindung handelt es sich bei dem Messgerät, in dem die Elektronikeinsatz-Anordnung eingesetzt wird, um entweder ein Druckmessgerät oder ein Füllstandsmessgerät.

Es kann als ein Aspekt der vorliegenden Erfindung gesehen werden, dass Zusatzbauteile bzw. Zusatzelektroniken über eine Klemm- und/oder Rast-Schnapp-Verbindung an einem standardisierten Elektronikbecher bzw. Elektronikeinsatz befestigt werden. D. h. die Zusatzbauteile bzw. Zusatzelektroniken können sich bei jedem Messgerät auch über große Stückzahlen hinweg an der gleichen Position befinden. Durch die Klemm- und/oder Rast-Schnapp-Verbindung sind die Zusatzbauteile bzw. Zusatzelektroniken vibrationsfest mit dem Elektronikbecher und somit dem Messgerät verbunden. Die Zusatzbauteile bzw. Zusatzelektroniken können auch nicht durch beispielsweise einen Überkopfeinbau des Messgeräts ihre Position im Gehäuse des Messgeräts verändern.

Anstatt ein Elektronikmodul lose anzubringen kann das Elektronikmodul an einem standardisierten Kunststoffelektronikbecher angebracht werden, indem an dem Kunststöffelektronikbecher angespritzte Aufnahmen, Zapfen usw., als Aufnahme einer standardisierten Rast-Schnapp-Klemm-Verbindung verwendet werden können. Es können beispielsweise in Kunststoff vergossene bzw. umspritzte Bauteile oder umspritzte Elektronikprints eingesetzt werden, wobei der feste oder flexible Verguss dieser Bauteile Außenkonturen aufweisen kann, die sich in die an den Elektronikbechern vorhandenen angespritzten Geometrien anpassen oder die in die angespritzten Geometrien einrasten.

Es können beispielsweise Schraubenaufnahmen der Befestigung des Elektronikbechers im Gehäuse verwendet werden, ohne den Platz so zu verschwenden, dass die Schrauben zur Befestigung des Bechers im Gehäuse nicht mehr erreicht werden können. D. h., dass die Zusatzbauteile bzw. Zusatzelektroniken bereits vor Einsetzen des Elektronikbechers in das Messgerätegehäuse über die Klemm-Rast-Schnapp-Verbindung auf das standardisierte Elektronikgehäuse vergleichbar mit einem Rucksack aufgeschnappt werden können. Es kann in einem Arbeitsgang die komplette Einheit in das Gehäuse eingesetzt werden und es kann ein nachträgliches unbestimmtes Einbringen eines Zusatzbauteils in vorhandene Hohlräume vermieden werden. Dadurch kann auch ein "Fummeln" vermieden werden.

Durch das Prinzip des Vergusses können auch mehrere benötigte Zusatzbauteile in diesen Verguss vergossen werden und als eine Einheit, z. B. als Rucksack oder als Elektronikmodul, auf den Elektronikbecher gerastet oder geklemmt werden. Statt dem Eingießen wäre auch ohne Verguss ein weiteres Gehäuse denkbar, das an der Außenkontur die entsprechende Schnappgeometrie aufweist, um an dem Elektronikbecher befestigt werden zu können. In dem Hohlraum des Zusatz-Gehäuses mit der Außenkontur können die Bauteile bzw. Elektroniken oder Elektronikprints verstaut werden.

Im Folgenden werden vorteilhafte Ausführungsbeispiele der vorliegenden Erfindung mit Verweis auf die Figuren beschrieben:
Fig. 1 zeigt eine Draufsicht auf ein Elektronikmodul gemäß einem exemplarischen Ausführungsbeispiel der vorliegenden Erfindung.
Fig. 2 zeigt eine Unteransicht von einem Elektronikmodul gemäß einem exemplarischen Ausführungsbeispiel der vorliegenden Erfindung.
Fig. 3 zeigt eine Seitenansicht eines Elektronikmoduls gemäß einem exemplarischen Ausführungsbeispiel der vorliegenden Erfindung.
Fig. 4 zeigt eine Teilansicht einer Befestigungseinrichtung eines Elektronikeinsatzes gemäß einem exemplarischen Ausführungsbeispiel der vorliegenden Erfindung.
Fig. 5 zeigt eine Seitenansicht einer Elektronikeinsatz-Anordnung gemäß einem exemplarischen Ausführungsbeispiel der vorliegenden Erfindung.
Fig. 6 zeigt eine Frontansicht einer Elektronikeinsatz-Anordnung gemäß einem exemplarischen Ausführungsbeispiel der vorliegenden Erfindung.
Fig. 7 zeigt eine Draufsicht einer Elektronikeinsatz-Anordnung gemäß einem exemplarischen Ausführungsbeispiel der vorliegenden Erfindung.
Fig. 8 zeigt eine perspektivische Darstellung einer Elektronikeinsatz-Anordnung in einem entkoppelten Betriebszustand gemäß einem exemplarischen Ausführungsbeispiel der vorliegenden Erfindung.
Fig. 9 zeigt eine perspektivische Darstellung einer Elektronikeinsatz-Anordnung in einem gekoppelten Betriebszustand gemäß einem exemplarischen Ausführungsbeispiel der vorliegenden Erfindung.
Fig. 10 zeigt eine weitere perspektivische Darstellung einer Elektronikeinsatz-Anordnung in einem gekoppelten Betriebszlistand gemäß einem exemplarischen Ausführungsbeispiel der vorliegenden Erfindung.
Fig. 11 zeigt eine perspektivische Darstellung einer Elektronikeinsatz-Anordnung in gekoppeltem Zustand mit einem Messgerätegehäuse gemäß einem exemplarischen Ausführungsbeispiel der vorliegenden Erfindung.
Fig. 12 zeigt eine Draufsicht auf eine Elektronikeinsatz-Anordnung in einem eingebauten Zustand in einem Messgerätegehäuse gemäß einem Ausführungsbeispiel der vorliegenden Erfindung.

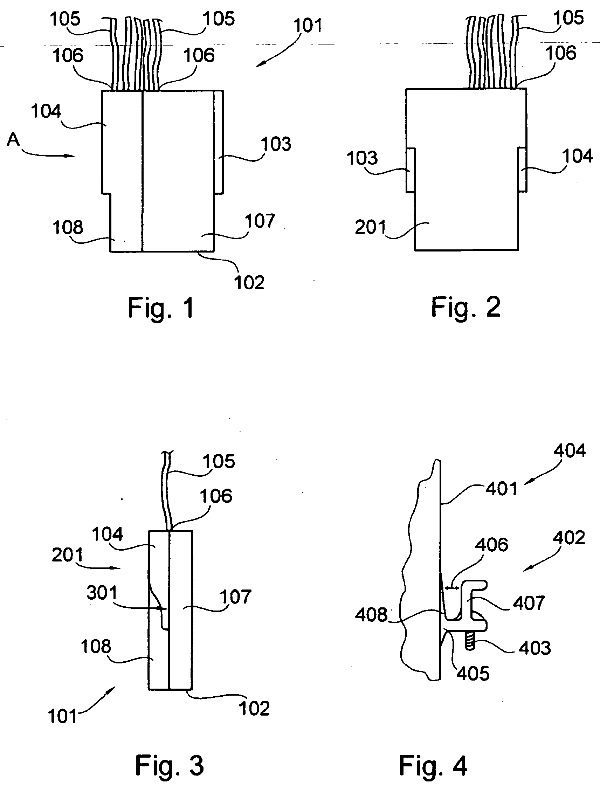

Die Darstellungen in den Figuren sind schematisch und nicht maßstäblich. In der folgenden Beschreibung der Fig. 1 bis 12 werden die gleichen Bezugsziffern für gleiche oder sich entsprechende Elemente verwendet.

I2C oder I²C (für Integrated Circuit) ist ein serieller Bus für Computersysteme). Er kann benutzt werden, um Geräte mit geringer Übertragungsgeschwindigkeit an einem Embedded System oder eine Hauptplatine anzuschließen.

Das HART® Protokoll (Highway Adressible Remote Transmitter) kann insbesondere als ein offenes Master Slave Protokoll für busadressierbare Feldgeräte bezeichnet werden. Es kann eine Methode implementieren, Daten mittels Frequency Shift Keying (FSK), aufgesetzt auf dem 4 bis 20 mA-Prozesssignal, zu übertragen, um Femkonfiguration und Diagnoseüberprüfungen zu ermöglichen. Es kann sowohl als Zweidraht-Bus mit integrierter Spannungsversorgung oder Vierdraht-Bus mit separater Spannungsversorgung ausgebildet sein.

Sowohl I2C als auch HART® eignen sich als Protokoll zur Kommunikation mit einem Feldgerät, z. B. mit einem Flüssigkeitsmessgerät oder mit einem Druckmessgerät.

Fig. 1 zeigt eine Draufsicht auf ein Elektronikmodul gemäß einem exemplarischen Ausführungsbeispiel der vorliegenden Erfindung. Fig. 1 zeigt ein Elektronikmodul 101, das eine im Wesentlichen rechteckige Form mit jeweils zwei längeren parallelen und zwei kürzeren parallelen Seiten aufweist. Das Elektronikmodul 101 weist einen Modulkörper 102 und jeweils an dessen Längsseiten ausgebildet eine rechte Führungsschiene 103 und eine linke Führungsschiene 104 auf.

Die Führungsschienen 103 und 104 schließen bündig mit einer der kürzeren Seiten des Elektronikmoduls 101 ab und erstrecken sich parallel zu den beiden gleich langen längeren Seiten über etwa drei Viertel der Länge der beiden längeren Seiten. Dadurch weist das Elektronikmodul 101 eine T-Form auf.

Der Modulkörper 102 ist in die beiden Teilbereiche 108 und 107 unterteilt. Der Teilbereich 107 weist aus der Zeichenebene heraustretend eine größere Höhe auf als der Teilbereich 108 auf. Somit umschließt 107 ein größeres Volumen als der Teilbereich 108, weshalb in dem Teilbereich 107 größere Bauteile als in dem Teilbereich 108 untergebracht werden können.

Der Gehäusekörper 102 weist fünf Schnittstellen 106 auf, durch die die Anschlussleitungen 105 in das Innere des Gehäusekörpers 102, insbesondere auf eine sich in dem Gehäusekörper 102 befindliche Baugruppe, gelangen können. Alternativ könnten die Schnittstellen 106 als Anschlussklemmen ausgeführt sein, an denen die Anschlussleitungen 105 befestigt werden können.

Fig. 2 zeigt eine Unteransicht von einem Elektronikmodul gemäß einem exemplarischen Ausführungsbeispiel der vorliegenden Erfindung. Fig. 2 zeigt, dass die Führungsschienen 103 und 104 eine Kontur aufweisen, wodurch sie als Klemmverbindung ausgebildet sind. Die ebene Fläche 201 erstreckt sich zumindest teilweise über die Führungsschiene 103 und 104. Erst ab etwa der Hälfte der Länge der Führungsschiene 103 und 104 sind die Schienenkörper 103 und 104 nicht mehr mit Vollmaterial ausgefüllt und somit nicht mehr Teil der ebenen Fläche 201.

Fig. 3 zeigt eine Seitenansicht eines Elektronikmoduls gemäß einem exemplarischen Ausführungsbeispiel der vorliegenden Erfindung. Fig. 3 ist dabei die Darstellung einer Draufsicht auf eine Seite des Elektronikmoduls 101 in Blickrichtung A der Fig. 1. Der Gehäusekörper 102 weist auch in der Seitenansicht eine rechteckige Form auf. Es ist zu sehen, dass die Höhe des Seitenbereichs 107 die Höhe des Seitenbereichs 108 übersteigt. Es ist auch zu sehen, dass sich die ebene Fläche 201 nur über einen Teilbereich der Führungsschiene 104 erstreckt. Die Führungsschiene 104 weist dabei eine flaschenförmige Form auf. Dadurch wird ein Endbereich 301 der Führungsschiene 104 ausgebildet, der nicht bis zur ebenen Fläche 201 reicht. Durch die Flaschenform ist die Führungsschiene 104 an die Geometrie einer Schienenaufnahme angepasst. Außerdem kann das Endstück 301 bei einem Druck in Richtung der ebenen Fläche 201 leicht nachgeben und mittels einer dadurch entstehenden Federkraft einen entsprechenden Gegendruck ausüben. Die Schnittstelle 106 ist auf der Höhe der der ebenen Fläche 201 gegenüberliegenden Kante der Führungsschiene 104 angeordnet.

Fig. 4 zeigt eine Teilansicht einer Befestigungseinrichtung eines Elektronikeinsatzes. Es ist die ebene Fläche 401 des Elektronikeinsatzes mit dem Anspritzteil 402 zu sehen. Das Anspritzteil 402 ist ein Schraubenhalter für die Befestigungsschraube 403. Mit der Befestigungseinrichtung 402 oder dem Anspritzteil 402 wird der Elektronikeinsatz 404 an einem in Fig. 4 nicht gezeigten Messgerätegehäuse befestigt.

Die Befestigungseinrichtung 402 weist einen senkrechten Flansch 405 auf, der rechtwinklig an der ebenen Fläche 401 angeordnet ist in einem Fußbereich des senkrechten Flansch 405, ist ein Vorsprung 408 ausgebildet. In einem Abstand 406 verläuft parallel zu der ebenen Fläche 401 ein weiterer Flansch 407. Zwischen dem Vorsprung 408 und dem Befestigungsflansch 407 wird eine Aufnahme ausgebildet, in die die Führungsschiene des Elektronikmoduls 103 bzw. 104 eingeführt werden kann. Der Befestigungsflansch 407 und der Vorsprung 408 weisen im Wesentlichen den Abstand 406 auf.

Bei einer Kopplung der Führungsschiene 104 bzw. 103 mit der Befestigungseinrichtung 402 kommen die ebenen Flächen des Elektronikmoduls 201 und die ebene Fläche des Elektronikeinsatzes 401 plan aufeinander zu liegen. Durch das Einführen der Führungsschienen 103 bzw. 104 des Elektronikmoduls in den Spalt 406 bzw. in die Aufnahme 406 wird der Befestigungsflansch 407 leicht von der ebenen Fläche weggedrückt.

Aufgrund der elastischen Eigenschaften des plastischen Materials, aus dem das Anspritzteil 402 gefertigt ist, übt der Befestigungsflansch 407 über eine der Führungsschienen 103 oder 104 einen Druck auf einen Seitenbereich des Elektronikmoduls 101 aus. Durch diesen Druck werden die ebenen Flächen 201 und 401 des Elektronikmoduls bzw. des Elektronikeinsatzes aufeinander gedrückt, wodurch die Reibung, insbesondere die Haftung, der Flächen 201, 401 aneinander erhöht wird. Die Erhöhung der Reibung bewirkt einen festen Sitz des Elektronikmoduls 101 auf dem Elektronikeinsatz 404 in einem eingebauten oder gekoppelten Zustand.

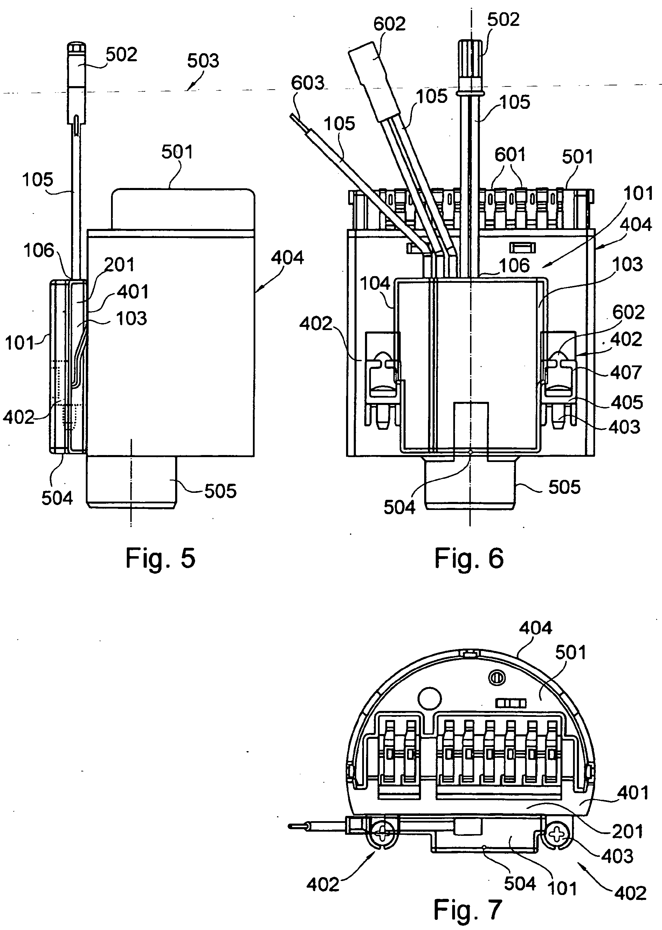

Fig. 5 zeigt eine Seitenansicht einer Elektronikeinsatz-Anordnung gemäß einem exemplarischen Ausführungsbeispiel der vorliegenden Erfindung. Fig. 5 zeigt den Elektronikeinsatz 404 mit einem Elektronikmodul 101 in einem gekoppelten Zustand. Das Elektronikmodul ist mit der Führungsschiene 103 in der Befestigungseinrichtung 402 eingerastet. Die ebene Fläche 401 des Elektronikeinsatzes 404 und die ebene Fläche 201 des Elektronikmoduls liegen plan aufeinander, wodurch sie mittels einer Reibungskraft aneinander gehalten werden.

Ebenfalls in Fig. 5 ist der Schnittstellenbereich 501 des Elektronikeinsatzes 404 zu sehen. Außerdem ist die Schnittstelle 106 des Elektronikmoduls 101 samt einer Anschlussleitung 105, die einen Anschlussstecker 502 aufweist, dargestellt. Durch die Koppelung des Elektronikmoduls 101 mit dem Elektronikeinsatz 404 bleibt der Abstand zwischen der Schnittstelle 106 und einem Bezugspunkt des Schnittstellenbereichs 501 während einer Bewegung der Elektronikeinsatz-Anordnung 503 konstant, da das Elektronikmodul 101 der Bewegung des Elektronikeinsatzes 404 folgt. Durch den konstanten Abstand kann das Anschlusskabel 105 mit dem Anschlussstecker 502 in eine der Schnittstellen eingeführt werden, ohne dass bei einer Bewegung der Elektronikeinsatz-Anordnung 503 eine Kraft vom Elektronikmodul 101 auf die Anschlussleitung 105 und insbesondere den Stecker 502 wirkt, die den Stecker aus einem Interface des Interfacebereiches 501 lösen könnte. In Fig. 5 ist der Stecker 502 jedoch in einem gelösten Betriebszustand dargestellt.

Ebenfalls zu sehen ist das im Elektronikmodul 101 eingebaute EMV-Filter 504, das für eine Abschirmung des Elektronikmoduls 101, insbesondere eines im Elektronikmodul 101 eingebauten Bauteils, sorgt.

Der Elektronikeinsatz 404 weist eine Messgerätezuführung 505 auf, mittels der eine Verbindung zwischen einer in dem Elektronikeinsatz 404 befindlichen Messelektronik mit einem zugehörigen Messgerät (in Fig. 5 nicht gezeigt) erfolgen kann.

Fig. 6 zeigt eine Frontansicht einer Elektronikeinsatz-Anordnung gemäß einem exemplarischen Ausführungsbeispiel der vorliegenden Erfindung in einem eingebauten Zustand. Es ist wiederum der Elektronikeinsatz 404 samt Messgerätezuführung 505 und Schnittstellenbereich 501 zu sehen. In dieser Frontansicht sind auch die einzelnen Schnittstellen 601 dargestellt, an denen die Stecker 602 bzw. der blanke Draht 603 angeschlossen werden können. Die Verbindung von den Schnittstellen 601 zu den Schnittstellen 106 übernehmen die Anschlussleitungen 105. Es ist ebenfalls zu sehen, dass das Elektronikmodul 101 mit den Führungsschienen 103 bzw. 104, in die Befestigungseinrichtungen 402 geklemmt ist.

Im Folgenden sollen die beiden Befestigungseinrichtungen 402 näher betrachtet werden, deren Aufbau symmetrisch ist und folglich nur einmal beschrieben wird. Es handelt sich dabei um Anspritzteile, die für die Befestigung des Elektronikeinsatzes 404 an einem nicht gezeichneten Messgerätegehäuse vorgesehen sind. Die Befestigung an dem Messgerätegehäuse erfolgt mittels der Befestigungsschraube 403, die in einer Befestigungseinrichtung, bestehend aus dem senkrechten Flansch 405 und dem Befestigungsflansch 407, angeordnet ist.

In der Frontansicht erscheinen die Flansche 405 und 407 rahmenförmig, wobei der Rahmen durch den Spalt 602 unterbrochen wird. Der Spalt 602 trennt damit zwei Federelemente ab, die aus den Flanschen 405 und 407 gebildet werden. Somit kann sich beim Einschieben des Elektronikmoduls 101 hinter den parallelen Befestigungsflansch 407 der dem Elektronikmodul 101 zugewandte Teil des Rahmens der Befestigungseinrichtung 402 etwas aus der Zeichenebene heraus bewegen, um mittels einer Rückstellkraft die Befestigungsschiene 103 bzw. 104 festzuklemmen. Durch die bei der Auslenkung entstehende Rückstellkraft wird das Elektronikmodul 101 an dem Elektronikeinsatz 404 gehalten und der Abstand einer vorher bestimmten Schnittstelle 106 zu einer vorherbestimmten Schnittstelle 601 bleibt selbst bei einer Bewegung des Elektronikeinsatzes 404 konstant.

Fig. 7 zeigt eine Draufsicht einer Elektronikeinsatz-Anordnung gemäß einem exemplarischen Ausführungsbeispiel der vorliegenden Erfindung. Fig. 7 zeigt, dass der Elektronikeinsatz 404 teilweise kreisförmig ausgebildet ist, wobei die Kreisform von der ausgebildeten ebenen Fläche 401, die sehnenartig in dem vom Gehäuse 404 beschriebenen Kreis angeordnet ist, unterbrochen wird.

Das Elektronikmodul 101 samt EMV-Filter 504 ist hinter der Befestigungseinrichtung 402 eingeklemmt. Die Befestigungseinrichtung 402 ist für die Montage mittels einer Schraube 403 an einem Messgerätegehäuse vorgesehen. Durch den Einbau des Elektronikmoduls 101 wird der Zugang zu den Schrauben 403 nicht beeinträchtigt. Dabei ist die Breite der ebenen Fläche 201 an den Abstand der Befestigungseinrichtungen 402 angepasst. Die parallele Befestigung an zwei Befestigungseinrichtungen 402 erhöht die Festigkeit der Klemmverbindung. Das Elektronikmodul 101 kann jedoch leicht von Hand, d.h. ohne Werkzeug, von dem Elektronikeinsatz 404 entfernt werden. Die werkzeuglose Montage kann einen Montage- oder Reparatur-Prozess beschleunigen.

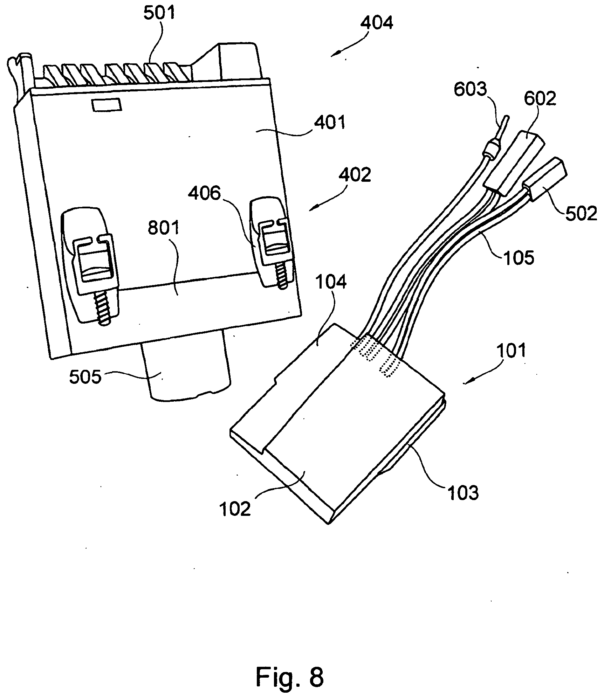

Fig. 8 zeigt eine perspektivische Darstellung einer Elektronikeinsatz-Anordnung in einem entkoppelten Betriebszustand gemäß einem exemplarischen Ausführungsbeispiel der vorliegenden Erfindung. Ebenfalls in Fig. 8 ist das Elektronikmodul samt der Führungsschienen 103 und 104 mit den Elektronikanschlussleitungen 105 und den zugehörigen Anschlusssteckern 502, 602 und 603 zu sehen. Die Anschlussstecker 502, 602 und 603 können in entsprechende Interface bzw. Schnittstellen der Schnittstellenleiste 501 eingeführt werden. Die Schnittstellen 501 können beispielsweise für eine Leistungsversorgung oder für einen Display- oder Bildschirmanschluss ausgebildet sein. Daneben ist es auch möglich, dass die Schnittstellen 601 des Schnittstellenbereichs 501 als ein Steueranschluss wie ein I²C-Bus ausgebildet sind.

Das Elektronikmodul 101 kann an den Elektronikeinsatz 404 angekoppelt werden, indem die Führungsschienen 104 bzw. 103 in die Aufnahmen 406 eingeführt werden. In Fig. 8 ist ebenfalls zu sehen, dass die Messgerätedurchführung 505 eine Erhebung 801 aufweist, die aus der ebenen Fläche 401 hervorsteht. Diese Hervorhebung kann in einem eingebauten Zustand den Modulkörper 102 des Elektronikmoduls 101 in Richtung des Flansches 407 anheben und somit den Druck der Führungsschienen 103 bzw. 104 mittels des Flansches 407 erhöhen, wodurch nochmals die Reibung und die Haftung erhöht werden kann.

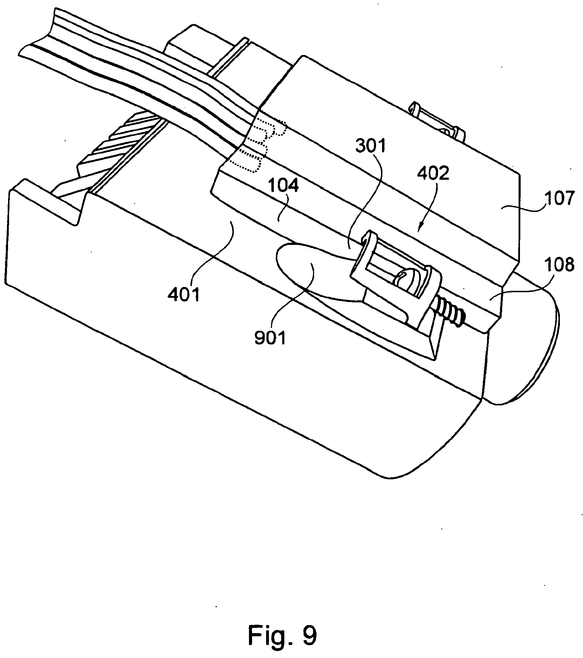

Fig. 9 zeigt eine perspektivische Darstellung einer Elektronikeinsatz-Anordnung in einem gekoppelten Betriebszustand gemäß einem exemplarischen Ausführungsbeispiel der vorliegenden Erfindung. In Fig. 9 ist die unterschiedliche Höhe der Aufnahme der Elektronikmodulkörper 107 und 108 zu sehen. Es ist ebenfalls zu sehen, dass der Endbereich 301 der Führungsschiene 104 mit seiner Flaschenform an eine Befestigungsstruktur 901, 408 der Befestigungseinrichtung 402 angepasst ist. Durch die Formanpassung ist ein ungehindertes Einschieben der Führungsschiene 402 in die Führung 406 möglich.

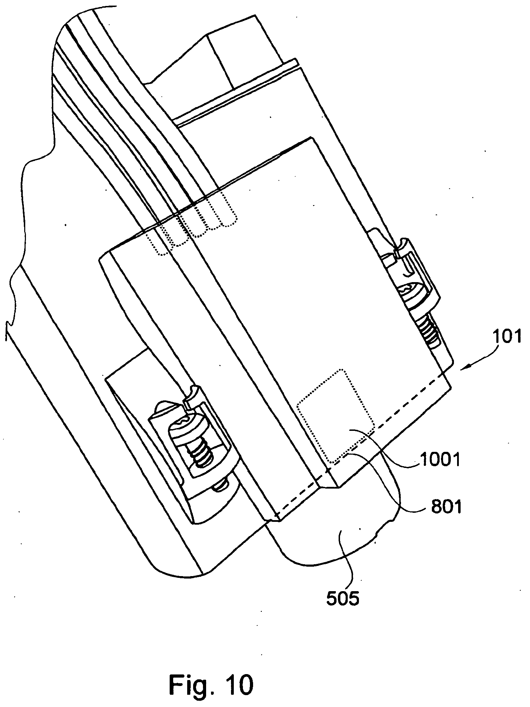

Fig. 10 zeigt eine weitere perspektivische Darstellung einer Elektronikeinsatz-Anordnung in einem eingebauten Zustand. In Fig. 10 ist zu sehen, dass mittels der Einkerbung 1001 die Form des Gehäuses des Elektronikmoduls 101 oder die Vergussform des Elektronikmoduls 101 auf der Seite der ebenen Fläche 201 an die Erhebung 801 angepasst ist, die durch die Messgeräteankopplung 505 verursacht ist. Die Einkerbung 1001 wird mittels einer Materialentnahme an der ebenen Fläche 201 des Elektronikmoduls 101 erzeugt. Wegen der Materialentnahme wird die ebene Fläche 201 im Bereich der Einkerbung unterbrochen.

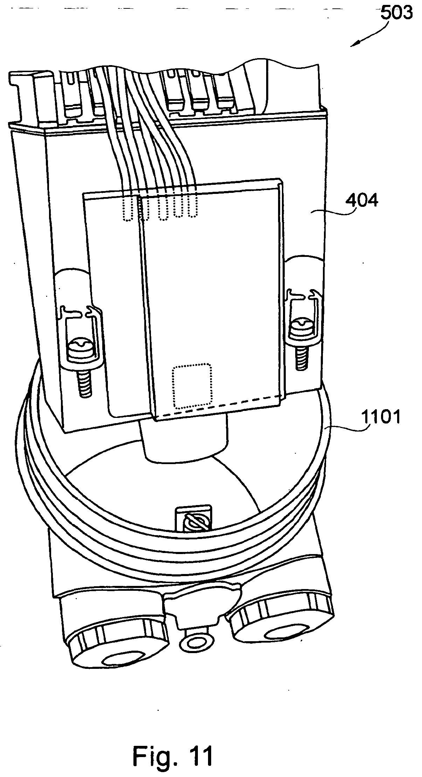

Fig. 11 zeigt eine perspektivische Darstellung einer Elektronikeinsatz-Anordnung mit einem Messgerätegehäuse. Das Messgerätegehäuse 1101 weist eine Zylinderform auf, in die die Elektronikeinsatz-Anordnung 503 aufgrund der im Wesentlichen zylinderförmigen Ausgestaltung des Elektronikeinsatzes 404 möglich ist.

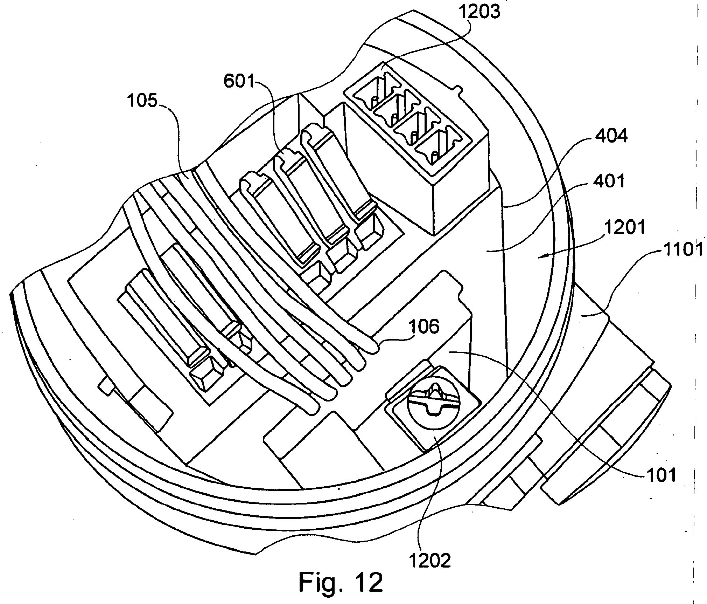

Fig. 12 zeigt eine Draufsicht auf eine Elektronikeinsatz-Anordnung in einem eingebauten Zustand in einem Messgerätegehäuse. Die Fig. 12 lässt erkennen, dass aufgrund der sehnenartigen Ausbildung der ebenen Fläche 401 des Elektronikeinsatzes 404 ein Hohlraum 1201 in dem Inneren des Messgerätegehäuses 1101 ausgebildet wird. Dieser Hohlraum 1201 kann genutzt werden, um das Elektronikmodul 101 unterzubringen. Dazu wird das Elektronikmodul 101 an den Elektronik-Einsatz 404 gekoppelt. An zusätzlich in dem Messgerätegehäuse vorhandenen Komponenten, wie beispielsweise der Erdungsschraube 1202, kann, aufgrund der positions- und vibrationsfesten Montage des Elektronikmoduls 101 an dem Elektronikeinsatz 404, kein Scheuern des Elektronikmoduls 101 erfolgen.

Die Schnittstellen 106 und 601 weisen bei einer Bewegung, insbesondere einer Erschütterung, des Messgerätegehäuses 1101 bzw. des Elektronikeinsatzes 404 einen im Wesentlichen konstanten Abstand auf, wodurch ein Zug an den Anschlussleitungen 105, bedingt durch die Gewichtskraft des Elektronikmoduls 101, vermieden werden kann. Der Abstand einer bestimmten Schnittstelle 106 zu dem Steuerinterface 1203 bleibt ebenfalls bei einer Bewegung konstant.

Ein Deckel (in Fig. 12 nicht gezeichnet) kann das Messgerätegehäuse 1101 abschließen. Somit ist eine kompakte Anordnung einer Zusatzelektronik innerhalb des Messgeräts 1101 möglich.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

Ergänzend sei darauf hingewiesen, dass "umfassend" keine anderen Merkmale oder Schritte ausschließt und "eine" oder "ein" keine Vielzahl ausschließt. Ferner sei daraufhingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

## Patentansprüche

1. Elektronikeinsatz-Anordnung für ein Messgerätegehäuse, aufweisend:
einen Elektronikeinsatz (404);
ein Elektronikmodul (101);
wobei der Elektronikeinsatz (404) eine erste Befestigungseinrichtung (402) und eine erste Schnittstelle (601) aufweist;
wobei das Elektronikmodul (101) eine zweite Befestigungseinrichtung (103, 104) und eine zweite Schnittstelle (106) aufweist;
wobei die erste Befestigungseinrichtung (402) und die zweite Befestigungseinrichtung (103, 104) zur Kopplung des Elektronikmoduls (101) mit dem Elektronikeinsatz (404) derart in Eingriff bringbar sind, dass ein Abstand zwischen der ersten Schnittstelle (601) und der zweiten Schnittstelle (106) bei einer Bewegung des Elektronikeinsatzes (404) konstant bleibt;
wobei der Elektronikeinsatz (404) zur Ausführung von Prozessen einer ersten Funktionalität eingerichtet ist;
wobei das Elektronikmodul (404) zur Ausführung von Prozessen einer zweiten Funktionalität eingerichtet ist;
wobei der Elektronikeinsatz (404) eine erste ebene Fläche (401) aufweist;
wobei das Elektronikmodul (101) eine zweite ebene Fläche (201) aufweist;
**dadurch gekennzeichnet, dass** in einem Betriebszustand, in dem die erste Befestigungseinrichtung (402) und die zweite Befestigungseinrichtung (103,104) in Eingriff gebracht sind, die erste ebene Fläche (401) und die zweite ebene Fläche (201) plan aufeinander zu liegen kommen; und
dass die erste Befestigungseinrichtung (402) eingerichtet ist, in diesem Betriebszustand auf die zweite Befestigungseinrichtung (103, 104) einen Druck in Richtung der zweiten ebenen Fläche (201) auszuüben, so dass die erste ebene Fläche (401) und die zweite ebene Fläche (201) aufeinander gedrückt werden;
wobei der Elektronikeinsatz (404) eine Messgerätezuführung (505) aufweist, mittels der eine Verbindung einer in dem Elektronikeinsatz (404) befindlichen Messelektronik mit einem Messgerät erfolgen kann;
wobei die Messgerätezuführung (505) eine Erhebung (801) aufweist, die aus der ersten ebenen Fläche (401) hervorsteht;
wobei die zweite ebene Fläche (201) eine Einkerbung aufweist, um die zweite ebene Fläche (201) an die Erhebung (801) anzupassen.

2. Elektronikeinsatz-Anordnung nach Anspruch 1, wobei die Bewegung eine Vibration ist.

3. Elektronikeinsatz-Anordnung nach Anspruch 1 oder 2,
wobei die erste Befestigungseinrichtung (402) und die zweite Befestigungseinrichtung (103, 104) werkzeuglos in Eingriff bringbar sind.

4. Elektronikeinsatz-Anordnung nach einem der Ansprüche 1 bis 3,
wobei die erste Befestigungseinrichtung (402) und die zweite Befestigungseinrichtung (103, 104) als mindestens eine Verbindung ausgewählt aus der Gruppe Klemm-Verbindung und Rast-Schnapp-Verbindung ausgebildet ist.

5. Elektronikeinsatz-Anordnung nach einem der Ansprüche 1 bis 4,
wobei die erste Befestigungseinrichtung (402) als angespritzte Aufnahme ausgebildet ist.

6. Elektronikeinsatz-Anordnung nach einem der Ansprüche 1 bis 5
wobei die erste Befestigungseinrichtung (402) als Schienenaufnahme ausgebildet ist;
wobei die zweite Befestigungseinrichtung (103, 104) als Führungsschiene ausgebildet ist;
wobei die Führungsschiene (103, 104) mit der Schienenaufnahme (402) in Eingriff bringbar ist.

7. Elektronikeinsatz-Anordnung nach einem der Ansprüche 1 bis 6,
wobei die erste Befestigungseinrichtung (402) derart ausgestaltet ist, dass der Elektronikeinsatz (404) mittels der ersten Befestigungseinrichtung (402) an dem Messgerätegehäuse (1101) befestigbar ist.

8. Elektronikeinsatz-Anordnung nach einem der Ansprüche 1 bis 7,
wobei die erste Befestigungseinrichtung (402) als Schraubenaufnahme eingerichtet ist.

9. Elektronikeinsatz-Anordnung nach einem der Ansprüche 1 bis 8,
wobei das Elektronikmodul (101) ausgebildet ist, einen Elektronik-Print aufzunehmen.

10. Elektronikeinsatz-Anordnung nach einem der Ansprüche 1 bis 9,
wobei das Elektronikmodul (101) ein Gehäuse aufweist.

11. Elektronikeinsatz-Anordnung nach einem der Ansprüche 1 bis 9,
wobei das Elektronikmodul (101) als Vergusselement ausgebildet ist.

12. Elektronikeinsatz-Anordnung nach einem der Ansprüche 1 bis 11,
wobei das Elektronikmodul (101) ein EMV Filter (504) aufweist.

13. Elektronikeinsatz-Anordnung nach einem der Ansprüche 1 bis 12,
das Elektronikmodul (101) ferner aufweisend:
eine Anschlussleitung (105);
wobei die Anschlussleitung (105) derart eingerichtet ist, die erste Schnittstelle (601) mit der zweiten Schnittstelle (106) zu verbinden.

14. Elektronikeinsatz-Anordnung nach einem der Ansprüche 1 bis 13, wobei das Elektronikmodul (101) zur Verarbeitung eines 4 bis 20 mA Signals eingerichtet ist.

15. Elektronikeinsatz Anordnung nach einem der Ansprüche 1 bis 14, wobei der Elektronikeinsatz (404) zur Ausführung einer Messfunktionalität eingerichtet ist.

16. Elektronikeinsatz-Anordnung nach einem der Ansprüche 1 bis 15, wobei das Elektronikmodul (101) zur Ausführung einer Anzeigenfunktionalität eingerichtet ist.

17. Elektronikeinsatz-Anordnung nach einem der Ansprüche 1 bis 15, wobei das Elektronikmodul (101) zur Ausführung einer Heizfunktionalität eingerichtet ist.

18. Messgerät mit einer Elektronikeinsatz-Anordnung nach einem der Ansprüche 1 bis 17.

19. Messgerät nach Anspruch 18, wobei das Messgerät als mindestens ein Messgerät ausgewählt aus der Gruppe Druckmessgerät und Füllstandsmessgerät ausgebildet ist.

## Claims

1. Electronics insert arrangement for a measuring device housing, comprising:
an electronics insert (404);
an electronics module (101);
the electronics insert (404) comprising a first attachment device (402) and a first interface (601);
the electronics module (101) comprising a second attachment device (103, 104) and a second interface (106);
it being possible to bring the first attachment device (402) and the second attachment device (103, 104) into engagement in order to couple the electronics module (101) to the electronics insert (404) in such a way that a space between the first interface (601) and the second interface (106) remains constant when the electronics insert (404) moves;
the electronics insert (404) being adapted to carry out processes of a first functionality;
the electronics module (404) being adapted to carry out processes of a second functionality;
the electronics insert (404) comprising a first plane surface (401);
the electronics module (101) comprising a second plane surface (201);
**characterised in that**, in an operating state in which the first attachment device (402) and the second attachment device (103, 104) are brought into engagement, the first plane surface (401) and the second plane surface (201) lie one to another in a planar manner; and
**in that**, in this operating state, the first attachment device (402) is adapted to exert pressure on the second attachment device (103, 104) towards the second plane surface (201) so that the first plane surface (401) and the second plane surface (201) are pressed against one another;
the electronics insert (404) comprising a measuring device infeed (505), by which measuring electronics, located in the electronics insert (404), can be connected to a measuring device;
the measuring device infeed (505) comprising an elevation (801) which projects from the first plane surface (401);
the second plane surface (201) comprising a notch in order to fit the second plane surface (201) to the elevation (801).

2. Electronics insert arrangement according to claim 1, wherein the movement is a vibration.

3. Electronics insert arrangement according to claim 1 or claim 2, wherein the first attachment device (402) and the second attachment device (103, 104) can be brought into engagement without the use of tools.

4. Electronics insert arrangement according to any of claims 1 to 3, wherein the first attachment device (402) and the second attachment device (103, 104) are in the form of at least one connection selected from the group of a clamp-type connection and a snap-in connection.

5. Electronics insert arrangement according to any of claims 1 to 4, wherein the first attachment device (402) is in the form of an injection-moulded retainer.

6. Electronics insert arrangement according to any of claims 1 to 5, wherein the first attachment device (402) is in the form of a rail retainer, wherein the second attachment device (103, 104) is in the form of a guide rail, wherein the guide rail (103, 104) can be brought into engagement with the rail retainer (402).

7. Electronics insert arrangement according to any of claims 1 to 6, wherein the first attachment device (402) is adapted such that the electronics insert (404) can be attached to the measuring device housing (1101) by the first attachment device (402).

8. Electronics insert arrangement according to any of claims 1 to 7, wherein the first attachment device (402) is adapted as a screw retainer.

9. Electronics insert arrangement according to any of claims 1 to 8, wherein the electronics module (101) is designed to accommodate an electronics print.

10. Electronics insert arrangement according to any of claims 1 to 9, wherein the electronics module (101) comprises a housing.

11. Electronics insert arrangement according to any of claims 1 to 9, wherein the electronics module (101) is in the form of a cast element.

12. Electronics insert arrangement according to any of claims 1 to 11, wherein the electronics module (101) comprises an EMC filter (504).

13. Electronics insert arrangement according to any of claims 1 to 12, the electronics module (101) further comprising:
a connection line (105);
wherein the connection line (105) is adapted in such a way as to connect the first interface (601) to the second interface (106).

14. Electronics insert arrangement according to any of claims 1 to 13, wherein the electronics module (101) is adapted to process a 4 to 20 mA signal.

15. Electronics insert arrangement according to any of claims 1 to 14, wherein the electronics insert (404) is adapted to carry out a measuring functionality.

16. Electronics insert arrangement according to any of claims 1 to 15, wherein the electronics module (101) is adapted to carry out a display functionality.

17. Electronics insert arrangement according to any of claims 1 to 15, wherein the electronics module (101) is adapted to carry out a heating functionality.

18. Measuring device comprising an electronics insert arrangement according to any of claims 1 to 17.

19. Measuring device according to claim 18, wherein the measuring device is in the form of at least one measuring device selected from the group of a pressure measuring device and a fill level measuring device.

## Revendications

1. Agencement d'insert électronique pour un carter d'appareil de mesure, comprenant :
un insert électronique (404) ;
un module électronique (101) ;
l'insert électronique (404) présentant un premier dispositif de fixation (402) et une première interface (601) ;
le module électronique (101) présentant un second dispositif de fixation (103, 104) et une seconde interface (106) ;
le premier dispositif de fixation (402) et le second dispositif de fixation (103, 104) pouvant être amenés en prise pour le couplage du module électronique (101) à l'insert électronique (404) de telle sorte qu'un écartement entre la première interface (601) et la seconde interface (106) reste constant lors d'un déplacement de l'insert électronique (404) ;
l'insert électronique (404) étant conçu pour l'exécution de processus d'une première fonctionnalité ;
le module électronique (404) étant conçu pour l'exécution de processus d'une seconde fonctionnalité ;
l'insert électronique (404) présentant une première face plane (401) ;
le module électronique (101) présentant une seconde face plane (201) ;
**caractérisé en ce que**, dans un état de fonctionnement dans lequel le premier dispositif de fixation (402) et le second dispositif de fixation (103, 104) sont amenés en prise, la première face plane (401) et la seconde face plane (201) viennent se situer en plan l'une sur l'autre ; et que
le premier dispositif de fixation (402) est conçu pour exercer sur le second dispositif de fixation (103, 104), dans cet état de fonctionnement, une pression en direction de la seconde face plane (201), de sorte que la première face plane (401) et la seconde face plane (201) sont pressées l'une sur l'autre ;
l'insert électronique (404) présentant une arrivée d'appareil de mesure (505), au moyen de laquelle peut s'effectuer une liaison d'une électronique de mesure, située dans l'insert électronique (404), avec un appareil de mesure ;
l'arrivée d'appareil de mesure (505) présentant une saillie (801), qui dépasse de la première face plane (401) ;
la seconde face plane (201) présentant un creux, pour adapter la seconde face plane (201) à la saillie (801).

2. Agencement d'insert électronique selon la revendication 1, le déplacement étant une vibration.

3. Agencement d'insert électronique selon l'une des revendications 1 et 2,
le premier dispositif de fixation (402) et le second dispositif de fixation (103, 104) pouvant être amenés en prise sans outil.

4. Agencement d'insert électronique selon l'une des revendications 1 à 3,
le premier dispositif de fixation (402) et le second dispositif de fixation (103, 104) étant réalisés sous forme d'au moins un assemblage sélectionné parmi le groupe de la jonction par serrage et de l'assemblage par crantage - encliquetage.

5. Agencement d'insert électronique selon l'une des revendications 1 à 4,
le premier dispositif de fixation (402) étant réalisé sous forme de logement injecté.

6. Agencement d'insert électronique selon l'une des revendications 1 à 5,
le premier dispositif de fixation (402) étant réalisé sous forme de logement de rail ;
le second dispositif de fixation (103, 104) étant réalisé sous forme de rail de guidage ;
le rail de guidage (103, 104) pouvant être amené en prise avec le logement de rail (402).

7. Agencement d'insert électronique selon l'une des revendications 1 à 6,
le premier dispositif de fixation (402) étant configuré de telle sorte que l'insert électronique (404) peut être fixé sur le carter d'appareil de mesure (1101) au moyen du premier dispositif de fixation (402).

8. Agencement d'insert électronique selon l'une des revendications 1 à 7,
le premier dispositif de fixation (402) étant conçu sous forme de logement de vis.

9. Agencement d'insert électronique selon l'une des revendications 1 à 8,
le module électronique (101) étant réalisé pour recevoir une impression électronique.

10. Agencement d'insert électronique selon l'une des revendications 1 à 9,
le module électronique (101) présentant un boîtier.

11. Agencement d'insert électronique selon l'une des revendications 1 à 9,
le module électronique (101) étant réalisé sous forme d'élément de scellement.

12. Agencement d'insert électronique selon l'une des revendications 1 à 11,
le module électronique (101) présentant un filtre EMV (504).

13. Agencement d'insert électronique selon l'une des revendications 1 à 12,
le module électronique (101) comprenant en outre :
une ligne de raccordement (105) ;
la ligne de raccordement (105) étant conçue de manière à relier la première interface (601) à la seconde interface (106).

14. Agencement d'insert électronique selon l'une des revendications 1 à 13, le module électronique (101) étant conçu pour le traitement d'un signal de 4 à 20 mA.

15. Agencement d'insert électronique selon l'une des revendications 1 à 14, l'insert électronique (404) étant conçu pour l'exécution d'une fonctionnalité de mesure.

16. Agencement d'insert électronique selon l'une des revendications 1 à 15, le module électronique (101) étant conçu pour l'exécution d'une fonctionnalité d'affichage.

17. Agencement d'insert électronique selon l'une des revendications 1 à 15, le module électronique (101) étant conçu pour l'exécution d'une fonctionnalité de chauffage.

18. Appareil de mesure avec un agencement d'insert électronique selon l'une des revendications 1 à 17.

19. Appareil de mesure selon la revendication 18, l'appareil de mesure étant réalisé sous forme d'au moins un appareil de mesure sélectionné parmi le groupe d'appareil de mesure de pression et d'appareil de mesure de niveau.
